# EUROPÄISCHE PATENTSCHRIFT

(11) **EP 1 097 397 B1**
(45) Veröffentlichungstag und Bekanntmachung des Hinweises auf die Patenterteilung: **03.09.2003**
(21) Anmeldenummer: 99945932.4
(22) Anmeldetag: 06.07.1999
(51) Int. Cl.: G02B 21/00, G02B 6/34, G02B 6/26, H01S 3/00

(54) **OPTISCHE ANORDNUNG ZUR ÜBERTRAGUNG KURZER LASERPULSE IN LICHTLEITFASERN**
OPTICAL ARRANGEMENT FOR TRANSMITTING SHORT LASER PULSES IN OPTICAL FIBERS
DISPOSITIF OPTIQUE POUR LA TRANSMISSION DE COURTES IMPULSIONS LASER DANS DES FIBRES OPTIQUES

(30) Priorität: 23.07.1998 DE 19833025
(43) Veröffentlichungstag der Anmeldung: 09.05.2001
(73) Patentinhaber: Leica Microsystems Heidelberg GmbH, 69120 Heidelberg (DE)
(72) Erfinder: ULRICH, Heinrich, D-69121 Heidelberg (DE); BORLINGHAUS, Rolf, D-69234 Dielheim (DE)
(74) Vertreter: Reichert, Werner F., Dr.
(86) Internationale Anmeldenummer: DE9902095
(87) Internationale Veröffentlichungsnummer: WO00005613

(56) Entgegenhaltungen:
- DE-A- 19 622 359
- DE-A- 19 755 361
- GB-A- 2 338 568
- US-A- 5 777 342
- LANGLEY A J ET AL: "HIGH-BRIGHTNESS FENTOSECOND LASER USING TITANIUM-SAPPHIRE TECHNOLOGY AND AMPLIFICATION IN DYES" APPLIED OPTICS,US,OPTICAL SOCIETY OF AMERICA,WASHINGTON, Bd. 33, Nr. 18, 20. Juni 1994 (1994-06-20), Seite 3875-3880 XP000454728 ISSN: 0003-6935
- KEMPE M ET AL: "SPATIAL AND TEMPORAL TRANSFORMATION OF FEMTOSECOND LASER PULSES BY LENSES WITH ANNULAR APERTURE" OPTICS COMMUNICATIONS,NL,NORTH-HOLLAND PUBLISHING CO. AMSTERDAM, Bd. 89, Nr. 2 / 03 / 04, 1. Mai 1992 (1992-05-01), Seite 119-125 XP000267972 ISSN: 0030-4018
- FORK R L ET AL: "FEMTOSECOND OPTICAL PULSES" IEEE JOURNAL OF QUANTUM ELECTRONICS,US,IEEE INC. NEW YORK, Bd. QE-19, Nr. 4, April 1983 (1983-04), Seite 500-506 XP000705344 ISSN: 0018-9197
- ATHERTON B W ET AL: "Pre-chirped fiber transport of 800 nm 100 fs pulses" PROCEEDINGS OF THE SPIE, 29. Januar 1998 (1998-01-29), XP002100242 in der Anmeldung erwähnt
- FRENCH P M W: "The generation of ultrashort laser pulses" REPORTS ON PROGRESS IN PHYSICS, FEB. 1995, UK, Bd. 58, Nr. 2, Februar 1995 (1995-02), Seiten 169-262, XP000889896 ISSN: 0034-4885

## Beschreibung

Die Erfindung betrifft eine optische Anordnung zur Übertragung kurzer Laserpulse in Lichtleitfasern, insbesondere zur Einkopplung in ein Lasermikroskop, vorzugsweise zur Verwendung in der 2-Photonen-Lasermikroskopie, mit einer Kurzpuls-Laserlichtquelle und mindestens einer Lichtleitfaser, wobei zwischen der Laserlichtquelle und der Lichtleitfaser eine optische Einrichtung zur zeitlichen Veränderung der Laserpulse vorgesehen ist.

Die Einkopplung von kurzen Laserpulsen in ein Lasermikroskop erfolgt vorzugsweise über Lichtleiter, wodurch man eine hohe Stabilität bei gleichzeitiger Flexibilität erreicht. Bei der Übertragung ultrakurzer Lichtpulse sind in der Praxis im wesentlichen zwei Störeffekte aufgetreten.

Zum einen werden die Lichtpulse durch Faserdispersion verbreitert, wobei typische Werte in etwa 1 ps/m bei 100 fs Pulsen betragen. Zum anderen treten schon bei einer mittleren Leistung von einigen Milliwatt Störungen in der Pulsübertragung durch nichtlineare Effekte infolge der hohen Energiedichte in der Faser auf. Dabei handelt es sich hauptsächlich um Selbstphasenmodulation (SPM).

Bei bekannten Anordnungen zur Übertragung von Kurzpulsen mittels Lichtleitfaser ist man in der Praxis der ungewollten Pulsverbreiterung infolge der positiven Faserdispersion bereits entgegengetreten, nämlich durch eine bewußt herbeigeführte entsprechende negative Dispersion vor der Lichtleitfaser. Eine solche negative Dispersion vor der Faser läßt sich beispielsweise durch Prismen oder Gitter bzw. Gitteranordnungen realisieren. Dabei wird die Pulsbreite am Faserende auf die ursprüngliche Pulsbreite oder eine längere Pulsbreite eingestellt. Lediglich beispielhaft wird hierzu auf die DE 196 22 359 A1 verwiesen.

Wenn man jedoch die ursprüngliche Pulsbreite durch geeignete Maßnahmen einstellt, limitieren die SPM-Effekte die Leistung der Lichtübertragung auf wenige Milliwatt. Dies ist in der Praxis nicht akzeptabel.

Aus Atherton B.W., Reed M.K, Proceedings of SPIE Vol. 3269, 1998, "Prechirped fiber transport of 800 nm 100 fs pulses" ist eine Methode bekannt, wonach mittels eines weiteren optischen Elements der Lichtpuls erst nach der Faser auf die ursprüngliche kurze Pulsbreite minimiert wird, so daß die Faser an keiner Stelle kurze Lichtpulse "sieht". Folglich treten dort keine oder nur minimale SPM-Effekte auf.

Die voranstehend genannten konstruktiven Maßnahmen werden bislang zur Kurzpulsübertragung in Lichtleitfasern verwendet, sind jedoch in ihrem Aufbau kompliziert und darüber hinaus aufwendig zu justieren, zumal diese Anordnungen stets eine Wellenlängenabhängigkeit aufweisen. Sowohl der komplizierte Aufbau als auch die aufwendige Justage lassen die bekannten Anordnungen als nur wenig geeignet erscheinen.

Der vorliegenden Erfindung liegt daher die Aufgabe zugrunde, eine optische Anordnung zur Übertragung kurzer Laserpulse in Lichtleitfasern derart auszugestalten und weiterzubilden, daß ungewollte Faserdispersion und nichtlineare Effekte infolge hoher Energiedichten, insbesondere Selbstphasenmodulation, mit einfachen Mitteln weitgehend verhindert bzw. kompensiert sind.

Die erfindungsgemäße optische Anordnung zur Übertragung kurzer Lichtpulse in Lichtleitfasern löst die voranstehende Aufgabe durch die Merkmale des Patentanspruches 1.

Es ist zunächst erkannt worden, daß zur Vermeidung der voranstehend genannten Probleme eine zeitliche Streckung der Lichtimpulse erforderlich ist. Dazu ist zwischen der Kurzpuls-Laserlichtquelle und dem Eingang der Lichtleitfaser beispielsweise eine Strecke aus Glas vorgesehen, die für eine zeitliche Streckung der Lichtimpulse sorgt. Eine solche Strecke - im Strahlengang des kurzpulsigen Laserlichts vor der Lichtleitfaser - sorgt dafür, daß die Materialdispersion im Bereich der normalen Dispersion - unter etwa 1500 nm Wellenlänge - bewirkt, daß der rote Anteil des Lichtpulses schneller läuft als der blaue Anteil. Demnach findet ein zeitliches "Verschmieren" des Laserpulses statt. Der Grad der Pulsverbreiterung ist dabei abhängig von der Länge der Strecke und vom Dispersionsparameter β₂ des verwendeten Mediums.

Die im Strahlengang vor der Lichtleitfaser vorgesehene Strecke könnte durch einen transparenten, mit einer geeigneten Flüssigkeit gefüllten Behälter gebildet sein. Bei der Flüssigkeit - transparent und dispergierend - könnte es sich um ein Silikonöl handeln.

Grundsätzlich könnte die Strecke als optisch homogenes, isotropes Medium ausgeführt sein. Im Konkreten könnte es sich bei dem Medium um einen Festkörper handeln, so beispielsweise um einen isotropen Kristall oder um Kunststoff mit entsprechenden Eigenschaften.

Die Strecke bzw. das Medium kann aus Glas ausgeführt sein, wobei es sich im Konkreten um einen Glaskörper handeln kann. Dieser Glaskörper kann wiederum als zylindrischer Glasblock oder als kubischer Glasblock ausgeführt sein, der in der einfachsten Form als monolithischer Block ausgebildet ist.

Ebenso ist es denkbar, daß die optische Einrichtung mehrere modular zu einem Gesamtblock zusammensetzbare Glasblöcke umfaßt, wobei sowohl der monolithische Einzelblock als auch die zu einem Gesamtblock zusammensetzbaren Glasblöcke austauschbar sind. Eine beliebig definierbare Strecke aus Glas läßt sich dabei realisieren, wobei der modulare Aufbau die Möglichkeit bietet, einerseits den Dispersionsparameter und andererseits die Länge der Strecke zu beeinflussen bzw. zu verändern.

Erfindungsgemäß ist nun eine Zusammensetzung zweier keilförmiger Glasblöcke im Sinne eines Schiebe-Keil-Paars denkbar die in vorteilhafter Weise eine einfache Variation der Gesamtblocklänge ermöglicht. Der Glasblock bzw. die Glasblöcke können dabei austauschbar sein.

In besonders vorteilhafter Weise weist die optische Einrichtung einen großen Dispersionsparameter β₂ auf. Ein solch großer Dispersionsparameter bietet die Möglichkeit, die Länge der Strecke so klein wie möglich zu halten. So könnte die optische Einrichtung beispielsweise derart ausgelegt sein, daß ein etwa 80 Femto-Sekunden-Lichtpuls durch eine nur 5 cm lange Glasstrecke auf etwa 280 Femto-Sekunden verbreiterbar ist. Damit erhöht man die Schwelle für Selbstphasenmodulation (SPM) in Lichtleitfasern in etwa um das 3,5-fache.

Das als Medium dienende Glas ist mit geeigneten optischen Eigenschaften auszuwählen. So kann es sich dabei beispielsweise um eine spezielle Glassorte handeln, nämlich in vorteilhafter Weise um das optische Glas SF10 (Schwer Flint 10).

Wenn Rückreflexe des Laserlichts an einem Faserende zurück in die Kurzpuls-Laserlichtquelle gelangen, führt dies unter Umständen zu Störungen des Laserbetriebs. Insoweit läßt sich die optische Einrichtung in vorteilhafter Weise als Faraday-Rotator bzw. als Kombination eines Faraday-Rotators mit einer weiteren optischen Einrichtung ausbilden. Der Faraday-Rotator erlaubt einen wirksamen Einsatz im Hinblick auf die breitbandig einstellbare Emissionswellenlänge der Laserlichtquelle. Der Faraday-Rotator ist außerdem in der Lage, die Polarisation des emittierten Laserlichts geeignet zu drehen, so daß die Polarisationsrichtung des Rückreflexes von der im Strahlengang nachgeschalteten Lichtleitfaser zurück zum Laser um den gleichen Betrag erneut gedreht wird. Somit kann das zurückkommende Licht durch einen linearen Polarisator unterdrückt werden, der zwischen der Laserlichtquelle und dem Faraday-Rotator angeordnet ist. Der Polarisator ist parallel zur Polarisationsrichtung des von der Laserlichtquelle emittierten Laserlichts ausgerichtet.

Um nun die Pulsverbreiterung durch Dispersion, die sich zur Pulsverbreiterung durch die Glasstrecke hinzu addiert. möglichst klein zu halten, sollte eine relativ kurze Lichtleitfaser verwendet werden, so beispielsweise eine Lichtleitfaser mit einer Länge von 0,5 m. Insoweit ist es möglich, am Ende einer 0,5 m langen Lichtleitfaser Pulsbreiten von knapp unter 1 ps zu erhalten.

Die aus dem Stand der Technik bekannten Anordnungen nutzen sogenannte Pico-Sekunden-Laser, um nämlich sowohl die SPM-Effekte als auch die Dispersionseffekte so klein wie möglich zu halten. Dazu werden meist im Pico-Sekunden-Bereich arbeitende Titan-Saphir-Laser verwendet, die im Vergleich zu im Femto-Sekunden-Bereich arbeitenden Titan-Saphir-Lasern technisch aufwendiger und daher teurer sind. Vom Funktionsprinzip des Titan-Saphir-Lasers her gesehen sind Pulsbreiten im Bereich von 100 Femto-Sekunden als bevorzugte Pulsbreiten anzusehen, was die Verwendung kostengünstiger und kompakter Femto-Sekunden-Laser möglich macht. Solche Laser lassen sich nach der beanspruchten Lehre problemlos einsetzen, wobei die aus dem Stand der Technik bekannten Nachteile wirksam vermieden sind.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung der Erfindung anhand der Zeichnung werden auch im allgemeinen bevorzugte Ausgestaltungen und Weiterbildungen der Lehre erläutert. In der Zeichnung zeigt:
- Fig. 1: in einer schematischen Darstellung den grundsätzlichen Aufbau einer nicht im Rahmen der Erfindung Liegenden optischen Anordnung zur Übertragung kurzer Laserpulse in Lichtleitfasern und
- Fig. 2: in einer schematischen Darstellung die erfindungsgemäßen optische Einrichtung, wobei zwei keilförmige Glasblöcke (Glas-Prismen) eine Variation der Länge der Strecke ermöglichen.

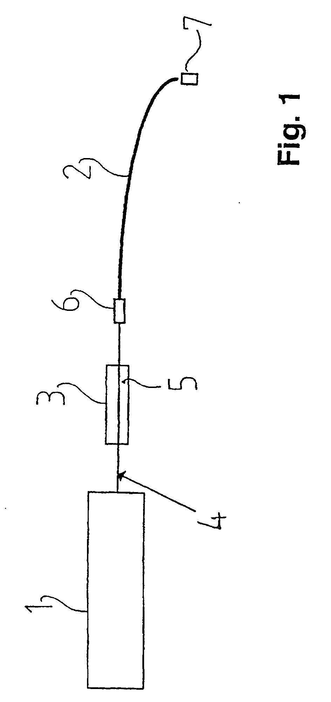

Fig. 1 zeigt - schematisch - eine außerhalb der Erfindung Liegende optische Anordnung zur Übertragung kurzer Laserpulse in Lichtleitfasern, wobei eine solche optische Anordnung zur Einkopplung in ein in der Fig. 1 nicht gezeigtes Lasermikroskop, insbesondere zur Verwendung in der 2-Photonen-Lasermikroskopie, dient. Die optische Anordnung umfaßt eine Kurzpuls-Laserlichtquelle 1 und eine Lichtleitfaser 2, wobei zwischen der Laserlichtquelle 1 und der Lichtleitfaser 2 eine optische Einrichtung 3 zur zeitlichen Veränderung der Laserpulse vorgesehen ist.

Diese optische Einrichtung 3 ist als zumindest weitgehend aus einem transparenten, dispergierenden Medium bestehende Strecke im Strahlengang 4 vor der Lichtleitfaser 2 ausgeführt, wobei diese Strecke zur zeitlichen Streckung der Laserpulse, d.h. zur Pulsverbreiterung, dient.

Bei dem in der Fig. 1 gewählten Beispiel ist die Strecke durch einen Glaskörper 5 gebildet, wobei es sich hier im Konkreten um einen kubischen bzw. zylindrischen oder prismatischen Glasblock in monolithischer Ausführung handelt.

Die kurzen Laserpulse werden durch den Glaskörper 5 gemäß allgemeiner Beschreibung zeitlich gestreckt, wobei der Grad der Pulsverbreiterung sowohl von der Länge des Glaskörpers 5 als auch von dessen Dispersionsparameter β₂ abhängt.

Nach Durchlauf des Glaskörpers 5 werden die Laserpulse an einer Einkopplungsstelle 6 in die Lichtleitfaser 2 eingekoppelt und gelangen nach Durchlaufen der Lichtleitfaser 2 über einen entsprechenden Faserausgang 7 unmittelbar oder mittelbar in ein in Fig. 1 nicht gezeigtes Lasermikroskop.

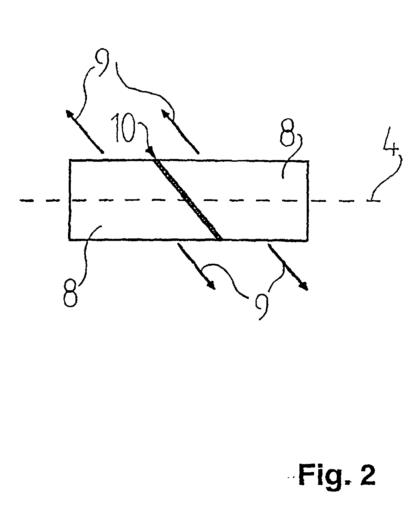

Fig. 2 zeigt erfindungsgemäß schematisch zwei keilförmige Glasblöcke 8 (Glas-Prismen) die entlang den eingezeichneten Pfeilen 9 verschiebbar sind. Durch gegenseitige Verschiebung der Glasblöcke 8 ist eine stufenlose Einstellung der durch das dispergierende Medium gebildeten Strecke im Strahlengang 4 des Laserlichts möglich. Zur vereinfachten zeichnerischen Darstellung weisen die beiden Glasblöcke 8 zwischen ihren zueinander gerichteten Flächen einen Abstand 10 auf, der beispielsweise mit einer geeigneten Flüssigkeit gefüllt sein kann.

Hinsichtlich weiterer Ausgestaltungen der beanspruchten Lehre, die des Fig. 2 nicht zu entnehmen sind, wird zur Vermeidung von Wiederholungen auf den allgemeinen Teil der Beschreibung verwiesen.

Im übrigen sei darauf hingewiesen, daß die voranstehend erörterten Ausführungsbeispiele lediglich der beispielhaften Erörterung der beanspruchten Lehre dienen, diese jedoch nicht auf die Ausführungsbeispiele einschränken.

### Bezugszeichenliste

- 1: Kurzpuls-Laserlichtquelle
- 2: Lichtleitfaser
- 3: optische Einrichtung
- 4: Strahlengang des Laserlichts
- 5: Glaskörper
- 6: Einkopplungsstelle von (2)
- 7: Faserausgang von (2)
- 8: Glasblöcke
- 9: Pfeil(e): Verschieberichtung(en) von (8)
- 10: Abstand (zwischen zwei Glasblöcken)

## Patentansprüche

1. Optische Anordnung zur Übertragung kurzer Laserpulse in Lichtleitfasern (2), insbesondere zur Einkopplung in ein Lasermikroskop, vorzugsweise zur Verwendung in der 2-Photonen-Lasermikroskopie, mit einer Kurzpuls-Laserlichtquelle (1) und mindestens einer Lichtleitfaser (2), wobei zwischen der Laserlichtquelle (1) und der Lichtleitfaser (2) eine optische Einrichtung (3) zur zeitlichen Veränderung der Laserpulse vorgesehen ist, **dadurch gekennzeichnet, dass** die optische Einrichtung (3) mehrere modular zu einem Gesamtblock zusammengefasste Blöcke (8) umfasst, wobei jeder Block zumindest weitgehend aus einem transparenten, dispersiven Medium aufgebaut ist und dass die zu mindestens einen Gesamtblock zusammengefassten Blöcke (8) vor der Lichtleitfaser (2) angeordnet sind, wobei die zu einem Gesamtblock zusammengefassten Blöcke (8) derart zur stufenlosen Einstellung der zeitlichen Streckung der Laserpulse (Pulsverbreiterung) dienen, dass die mehreren Blöcke (8) zur einfachen Variation der Gesamtblocklänge als Schiebe-Keil-Paar ausgeführt sind.

2. Anordnung nach Anspruche 1, **dadurch**
**gekennzeichnet, dass** die Blöcke (8) oder der Gesamtblock austauschbar sind bzw. ist.

3. Anordnung nach Anspruch 1, **dadurch**
**gekennzeichnet, dass** das dispersive Medium vom mindestens einem Block als Silikonöl ausgeführt ist.

4. Anordnung nach Anspruch 1, **dadurch**
**gekennzeichnet, dass** das dispersive Medium von mindestens einem Block als Festkörper ausgeführt ist.

5. Anordnung nach Anspruch 4, **dadurch**
**gekennzeichnet, dass** der Festkörper aus Kunststoff oder aus Glas besteht.

6. Anordnung nach Anspruch 1, **dadurch**
**gekennzeichnet, dass** das zu dem Gesamtblock zusammengefasste Medium als zylindrischer Glasblock ausgebildet ist.

7. Anordnung nach Anspruch 1, **dadurch**
**gekennzeichnet, dass** das zu dem Gesamtblock zusammengefasste Medium als kubischer Glasblock (8) ausgebildet ist.

8. Anordnung nach Anspruch 6 oder 7, **dadurch**
**gekennzeichnet, dass** es sich bei dem dispersiven Medium um das optische Glas SF10 (Schwer Flint 10) handelt.

9. Anordnung nach einem der Ansprüche 1 bis 8, **dadurch**
**gekennzeichnet, dass** die Lichtleitfaser (2) eine Länge von etwa 0,5 m aufweist.

10. Anordnung nach einem der Ansprüche 1 bis 9, **dadurch**
**gekennzeichnet, dass** zwischen der Laserlichtquelle (1) und der Optischen Einrichtung ein Polarisator angeordnet ist, der parallel zur Polarisationsrichtung des vom Laser (1) emittierten Laserlichts ausgerichtet ist.

## Claims

1. Optical arrangement for transmitting short laser pulses in optical fibres (2), in particular for coupling into a laser microscope, preferably for use in 2-photon laser microscopy, having a short pulse laser light source (1) and at least one optical fibre (2), an optical device (3) being provided between the laser light source (1) and the optical fibre (2) for the purpose of temporally varying the laser pulses, **characterized in that** the optical device (3) comprises a plurality of blocks (8) combined modularly to form an overall block, each block being constructed at least largely from a transparent, dispersive medium, and **in that** the blocks (8) combined to form at least one overall block are arranged in front of the optical fibre (2), the blocks (8) combined to form an overall block serving the purpose of infinitely variable setting of the temporal stretching of the laser pulses (pulse broadening) in such a way that the plurality of blocks (8) are designed as a disc/wedge pair for simple variation of the overall block length.

2. Arrangement according to Claim 1, **characterized in that** the blocks (8) or the overall block are/is exchangeable.

3. Arrangement according to Claim 1, **characterized in that** the dispersive medium of at least one block is designed as silicone oil.

4. Arrangement according to Claim 1, **characterized in that** the dispersive medium of at least one block is designed as a solid body.

5. Arrangement according to Claim 4, **characterized in that** the solid body consists of plastic or of glass.

6. Arrangement according to Claim 1, **characterized in that** the medium combined to form the overall block is formed as a cylindrical glass block.

7. Arrangement according to Claim 1, **characterized in that** the medium combined to form the overall block is formed as a cubic glass block (8).

8. Arrangement according to Claim 6 or 7, **characterized in that** the dispersive medium is the optical glass SF10 (Schwer Flint 10).

9. Arrangement according to one of Claims 1 to 8, **characterized in that** the optical fibre (2) has a length of approximately 0.5 m.

10. Arrangement according to one of Claims 1 to 9, **characterized in that** a polarizer which is aligned parallel to the direction of polarization of the laser light emitted by the laser (1) is arranged between the laser light source (1) and the optical device.

## Revendications

1. Dispositif optique pour la transmission de courtes impulsions laser dans des fibres optiques (2), notamment pour le couplage dans un microscope laser, de préférence pour l'utilisation dans la microscopie laser à 2 photons, avec une source de lumière laser (1) à impulsion courte et une fibre optique (2) au moins, un équipement optique (3) étant prévu entre la source de lumière laser (1) et la fibre optique (2) pour la modification temporelle de l'impulsion laser, **caractérisé en ce que** l'équipement optique (3) comprend plusieurs blocs modulaires (8) regroupés en un bloc global, chaque bloc étant réalisé, pour l'essentiel au moins, dans un milieu transparent dispersif et **en ce que** les blocs (8) regroupés en un bloc global au moins sont disposés devant la fibre optique (2), les blocs (8) regroupés en un bloc global servant au réglage sans paliers de l'extension temporelle des impulsions laser (allongement des impulsions) de telle sorte que la pluralité de blocs (8) est réalisée sous la forme d'une paire de coins coulissants pour la variation simple de la longueur du bloc global.

2. Dispositif selon la revendication 1, **caractérisé en ce que** les blocs (8) ou le bloc global sont interchangeables, respectivement est interchangeable.

3. Dispositif selon la revendication 1, **caractérisé en ce que** le milieu dispersif d'un bloc au moins est réalisé sous la forme d'huile de silicone.

4. Dispositif selon la revendication 1, **caractérisé en ce que** le milieu dispersif d'un bloc au moins est réalisé sous la forme d'un corps solide.

5. Dispositif selon la revendication 4, **caractérisé en ce que** le corps solide est constitué de matière plastique ou de verre.

6. Dispositif selon la revendication 1, **caractérisé en ce que** le milieu associé au bloc global est réalisé sous la forme d'un bloc de verre cylindrique.

7. Dispositif selon la revendication 1, **caractérisé en ce que** le milieu associé au bloc global est réalisé sous la forme d'un bloc de verre cubique (8).

8. Dispositif selon la revendication 6 ou 7, **caractérisé en ce que** le milieu dispersif est du verre optique SF10 (Flint lourd 10).

9. Dispositif selon une des revendications 1 à 8, **caractérisé en ce que** la fibre optique (2) présente une longueur de 0,5 m environ.

10. Dispositif selon une des revendications 1 à 9, **caractérisé en ce qu'**un polariseur est disposé entre la source de lumière laser (1) et l'équipement optique, orienté parallèlement à la direction de polarisation de la lumière laser émise par le laser (1).
